# FASCICULE DE BREVET EUROPEEN

(11) **EP 0 571 282 B1**
(45) Date de publication et mention de la délivrance du brevet: **12.06.1996**
(21) Numéro de dépôt: 93401290.7
(22) Date de dépôt: 19.05.1993
(51) Int. Cl.: E01F 9/011, G01C 15/04, B29C 33/12, B29C 65/00, E04H 12/22

(54) **Dispositif d'ancrage comprenant une semelle et un piquet d'ancrage, et procédé de fabrication d'une telle semelle**
Befestigungsmittel bestehend aus Platte und Anker und Verfahren zur Herstellung
Fixing means consisting of a footplate and anchoring means and a manufacturing process of these

(30) Priorité: 22.05.1992 FR 9206310
(43) Date de publication de la demande: 24.11.1993
(73) Titulaire: ETABLISSEMENTS LEBEC, F-17290 Aigrefeuille d'Aunis (FR)
(72) Inventeur: Becquet, Serge, Hôtel la Malouine, F-06300 Nice (FR); Ballu, François-Xavier, F-17000 La Rochelle (FR)
(74) Mandataire: Maureau, Philippe

(56) Documents cités:
- EP-A- 0 272 360
- FR-A- 2 605 346
- US-A- 4 185 425
- PATENT ABSTRACTS OF JAPAN vol. 5, no. 99 (E-63)(771) 26 Juin 1981 & JP-A-56 42 950 (MIYAGAWA KASEI KOGYO) 21 Avril 1981

## Description

La présente invention se rapporte à un dispositif d'ancrage comprenant une semelle et un piquet d'ancrage, la semelle étant traversée par un trou d'un diamètre supérieur au diamètre extérieur du piquet et le piquet comportant une tête de diamètre supérieur au diamètre dudit trou et étant destiné à être enfoncé dans le sol à travers la semelle. L'invention se rapporte par ailleurs à un procédé de fabrication d'un tel dispositif d'ancrage.

Des bornes cadastrales ou topographiques comprenant un dispositif d'ancrage de ce type sont bien connues depuis longtemps, par exemple par le brevet français n° 2 088 895 ou la demande de brevet français n° 2 420 122. Suivant le premier de ces documents, la tête de borne constituée par la semelle est en un matériau massif, tandis que selon le second document, la tête de borne est une tête creuse.

En ce qui concerne les piquets d'ancrage, de nombreuses dispositions ont déjà été proposées pour augmenter la résistance à l'arrachement de ces piquets, par exemple par la prévision de harpons ou d'éléments déployables (demande de brevet français n° 2 420 122, brevet allemand n° 910 126, brevet français n° 2 605 346).

Un problème particulier aux bornes du type défini ci-dessus, composées de deux parties séparées (tête de borne, piquet d'ancrage), consiste par le fait que même après la pose de la borne qui se fait par enfoncement du piquet à travers la tête, la tête de borne n'est pas réellement solidaire du piquet d'ancrage. En effet, il peut arriver que par exemple sous l'effet du tassement du sol ou du passage d'une roue de véhicule sur la tête de borne, cette dernière ne se trouve plus bloquée contre le sol par le piquet d'ancrage, mais présente au contraire une certaine mobilité verticale par rapport au piquet dont l'ancrage dans le sol n'a pas changé. De ce fait, la tête du piquet d'ancrage peut dépasser vers le haut la tête de borne reposant sur le sol, ce qui entraîne des risques d'endommagement, par exemple des pneumatiques de véhicules, ou de blessures pour les personnes ou du bétail.

Ce problème a déjà été reconnu et plusieurs solutions ont été proposées pour le résoudre.

Ainsi, selon la demande de brevet français n° 2 420 122, figure 3, des moyens pour rendre la tête de borne solidaire du piquet d'ancrage en fin d'enfoncement de ce dernier sont constitués par des ergots en forme de lamelles élastiques fixées à l'extrémité supérieure du piquet de manière à coopérer, à la fin de l'enfoncement du piquet, avec la face inférieure de la tête de borne. Cela implique cependant une opération de fixation (soudure) des ergots sur le piquet métallique, ce qui entraîne notamment une augmentation du prix de revient. De plus, les ergots d'un piquet ainsi équipé ne peuvent coopérer qu'avec des têtes de bornes d'un seul type.

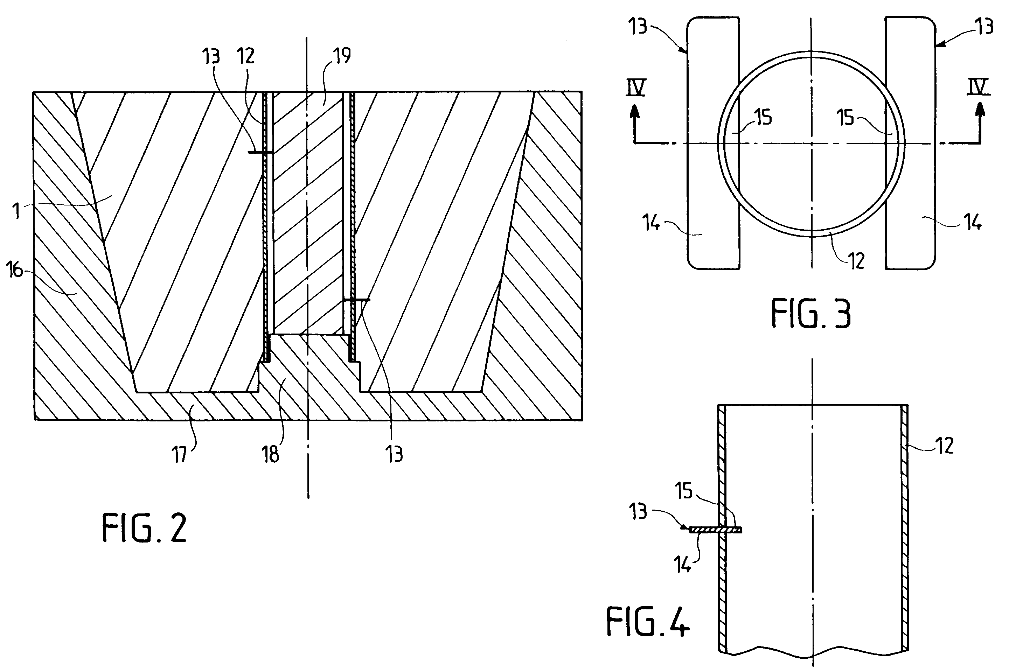

Une autre tentative pour résoudre ce problème est proposé par la demande de brevet européen n° 0 272 360. Suivant ce document, une tête de borne est verrouillée ou solidarisée avec un piquet d'ancrage au moyen d'un diaphragme constitué par un disque muni d'un alésage central de diamètre inférieur à celui du piquet, et de découpes radiales définissant des secteurs solidarisés entre eux par la périphérie du diaphragme. Selon ce document, le diaphragme en question peut soit être séparé de la tête de borne (figure 3), soit être intégré à cette dernière (figure 4).

Dans le premier cas, trois éléments (tête de borne, diaphragme et piquet) sont nécessaires pour poser une borne. De plus, dans la mesure où le diaphragme n'est pas solidaire de la tête de borne, l'enfoncement du piquet à travers ce diaphragme reposant sur le sol provoque, au moins dans des sols mous, un entraînement du diaphragme dans le sol, par le piquet, ce qui compromet la solidarisation correcte de la tête de borne avec le piquet, en fin de pose.

Dans le second cas, l'intégration du diaphragme à la tête de borne est destinée à assurer le centrage du piquet dans l'axe longitudinal du trou de la tête de borne, lorsque cette dernière est une tête de borne évidée à la base. De plus, on ne trouve dans ce document aucun enseignement sur la manière suivant laquelle le diaphragme pourrait être intégré à la tête de borne qui est une pièce moulée.

Il convient par ailleurs de noter qu'un tel diaphragme en tôle d'acier présente des arêtes tranchantes entraînant un risque de blessures pour les personnes manipulant la borne avant la pose, que le diaphragme soit séparé de la tête de borne (figure 3) ou soit "intégrée" à la tête de borne (figure 4). Cette solution ne donne donc pas satisfaction.

Un autre problème d'ancrage se rencontre lors de la pose de mâts, ou par exemple de poteaux portant des panneaux indicateurs ou de signalisation, et d'autres éléments fixés au sol. Jusqu'à présent, cette pose se fait généralement soit directement par scellement du pied de poteau dans une masse de béton coulée dans un trou creusé dans le sol, soit par scellement d'organes d'ancrage dans une telle masse de béton et par fixation du pied de mât aux organes d'ancrage après durcissement du béton.

Dans les deux cas, cette pose implique le creusement d'un trou relativement profond, et le gachage de béton, donc deux opérations nécessitant de la main d'oeuvre, l'utilisation d'outils et la mise en oeuvre et la préparation de matériaux (ciment, sable, eau). De plus, dans les deux cas, la pose ne peut être considérée comme terminée et définitive qu'après le durcissement du béton et des précautions particulières de protection sont souvent nécessaires jusqu'à ce moment. Par conséquent, le mode de pose est long et d'un coût élevé.

La présente invention vise un dispositif d'ancrage comprenant une semelle traversée par un trou et un piquet d'ancrage destiné à être enfoncé dans le sol à travers la semelle, ce dispositif étant muni de moyens de solidarisation ou de verrouillage de la semelle avec le piquet en fin d'enfoncement, moyens qui fassent partie intégrante du dispositif, fonctionnent correctement, quel que soit le sol dans lequel le piquet doit être enfoncé, assurent un verrouillage ou une solidarisation fiable et ne présentent aucun risque de blessures pour les personnes manipulant le dispositif d'ancrage.

L'invention vise par ailleurs l'utilisation d'un tel dispositif d'ancrage pour l'ancrage, rapide et efficace d'une borne cadastrale et topographique, d'une part, et pour la pose simple et instantanée d'un mât, poteau ou élément analogue, d'autre part.

L'invention vise également un procédé simple et peu coûteux de fabrication d'une telle semelle avec des moyens incorporés de verrouillage ou de solidarisation avec un piquet d'ancrage.

Le dispositif d'ancrage conforme à l'invention comprend une semelle et un piquet d'ancrage. La semelle est traversée par un trou d'un diamètre supérieur au diamètre extérieur du piquet. Le piquet destiné à être enfoncé dans le sol à travers la semelle comporte une tête de diamètre supérieur au diamètre du trou de la semelle. Le dispositif comprend, par ailleurs, des moyens pour verrouiller ou solidariser la semelle avec le piquet à la fin de l'enfoncement de ce dernier. Selon l'invention, lesdits moyens de verrouillage ou de solidarisation comprennent au moins une griffe discrète qui, à l'intérieur du trou de la semelle, fait saillie de la paroi dudit trou pour coopérer avec le piquet de manière à permettre, lors de l'enfoncement du piquet à travers la semelle, un mouvement relatif du piquet par rapport à la semelle, dans le sens d'enfoncement, et à s'opposer à tout mouvement dans le sens contraire.

De préférence, plusieurs griffes sont prévues dans le trou de la semelle, ces griffes pouvant être disposées dans un même plan et/ou dans des plans différents.

Les différences principales des moyens de solidarisation ou de verrouillage conformes à l'invention, par rapport aux moyens proposés par la demande de brevet européen n° 0272360, consistent donc dans le fait que ces moyens sont constitués par des griffes incorporées à la semelle, en étant situées à l'intérieur du trou de la semelle, où elles ne sont pas accessibles par les doigts de la personne manipulant la semelle, ne pouvant ainsi pas occasionner des blessures.

Le procédé conforme à l'invention de fabrication d'un dispositif d'ancrage comprenant une semelle traversée par un trou pour son ancrage au sol au moyen d'un piquet d'ancrage enfoncé dans le sol à travers le trou de la semelle consiste à mouler une matière moulable dans un moule muni d'une partie centrale d'un diamètre inférieur au diamètre extérieur du piquet d'ancrage, réservant ledit trou dans la semelle. Selon l'invention, on emboîte sur ladite partie centrale un tube de diamètre intérieur supérieur au diamètre extérieur du piquet d'ancrage, comportant au moins un évidement. On rapporte de l'extérieur sur ledit tube au moins une pièce de verrouillage comprenant une partie d'ancrage extérieure au tube et au moins une partie faisant saillie à travers ledit évidement d'une griffe vers l'intérieur du tube. On fait porter ladite griffe contre la partie centrale du moule. On verse la matière moulable dans le moule, à l'extérieur dudit tube, pour constituer ainsi une semelle dans laquelle sont noyés ledit tube et la partie d'ancrage de la pièce de verrouillage.

En adaptant les dimensions de l'évidement prévu dans ledit tube aux dimensions de la pièce de verrouillage, il est possible de maintenir cette dernière dans le tube, avec la griffe en application contre la partie centrage du moule, par le seul effet de serrage de la pièce de verrouillage dans ledit évidement.

Suivant un autre mode de réalisation, on utilise un moyen de serrage, par exemple un bracelet élastique, pour appliquer la griffe de la pièce de verrouillage contre la partie centrale du moule, pendant l'introduction de la matière moulable dans le moule et pendant le durcissement de cette matière.

Dans le cadre de l'invention, diverses pièces de verrouillage peuvent être utilisées. Ainsi, les pièces de verrouillage peuvent être de simples lames plates rectilignes dont chacune constitue une seule griffe faisant saillie à l'intérieur du tube. Suivant un autre mode de réalisation, chaque pièce de verrouillage peut présenter la forme d'une lame plate en U définissant trois griffes faisant saillie à l'intérieur du tube, dans un plan perpendiculaire à l'axe du tube ou dans un plan oblique par rapport à l'axe du tube.

Une autre possibilité consiste à utiliser des pièces de verrouillage constituées par des lames pliées en U, chaque aile de la lame plate formant une griffe en saillie vers l'intérieur du tube, ces griffes pouvant être perpendiculaires ou obliques par rapport à l'axe du tube.

Deux application préférées du dispositif conforme à l'invention consistant dans l'ancrage direct d'une borne cadastrale ou topographique, auquel cas la semelle constitue la tête de borne, et dans l'ancrage indirect de mâts, poteaux et éléments analogues, auquel cas la semelle comporte des moyens pour la fixation du pied du mât, poteau ou élément analogue.

En se référant aux dessins schématiques annexés, on va décrire ci-après plus en détail plusieurs modes de réalisation illustratifs et non limitatifs d'un dispositif d'ancrage conforme à l'invention et du procédé de fabrication de la semelle de ce dispositif; sur les dessins:
la figure 1 est une coupe axiale d'un mode de réalisation d'une borne à ancrage direct à l'aide du dispositif conforme à l'invention;
la figure 2 montre le moulage de la tête de la borne du mode de réalisation de la figure 1;
les figures 3 et 4 montrent l'association de pièces de verrouillage au tube interne de la tête de borne de la figure 2;
la figure 5 montre le moulage de la tête d'un autre mode de réalisation d'une tête de borne conforme à l'invention;
les figures 6 et 7 montrent l'association de pièces de verrouillage au tube interne de la tête de borne de la figure 5;
la figure 8 montre le moulage d'encore un autre mode de réalisation d'une tête de borne conforme à l'invention;
les figures 9 et 10 montrent l'association de trois pièces de verrouillage au tube interne de la tête de borne de la figure 8;
la figure 11 montre le moulage d'un mode de réalisation supplémentaire d'une tête de borne conforme à l'invention;
les figures 12 et 13 montrent l'association de trois pièces de verrouillage au tube interne de la tête de borne de la figure 11;
la figure 14 est une coupe axiale du dispositif d'ancrage conforme à l'invention du poteau d'un panneau.

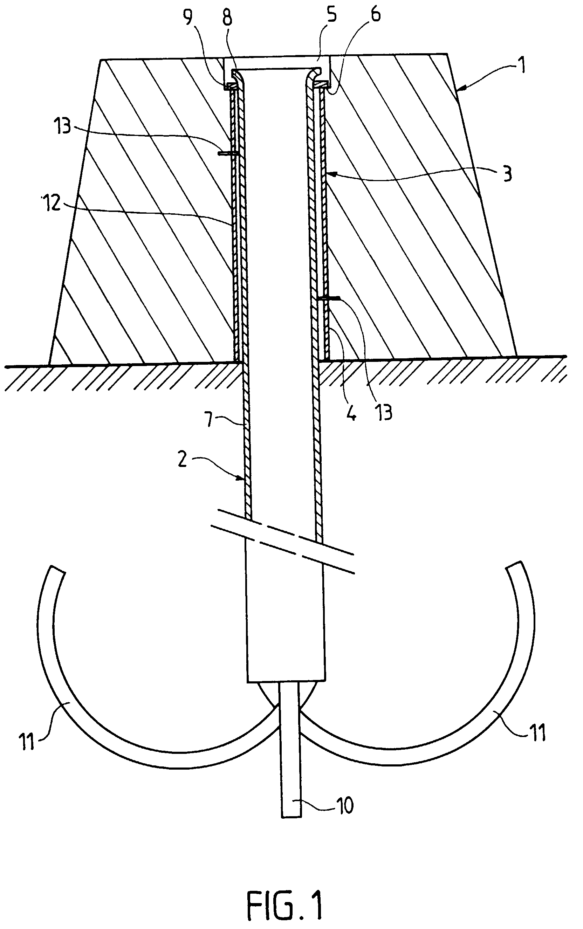

La borne cadastrale ou topographique telle qu'illustrée par la figure 1 comprend une tête de borne 1 et un piquet d'ancrage 2 pour la fixation de la tête de borne au sol.

La tête de borne 1 est ici une tête massive en matière moulée, par exemple en béton de résine. La tête 1 en forme de tronc de cône ou de tronc de pyramide est munie d'un trou central 3 comprenant une partie inférieure 4 et une partie supérieure 5 de plus grand diamètre que la partie 4, les deux parties 4 et 5 se raccordant par un épaulement 6.

Le piquet d'ancrage 2 est un piquet selon le brevet français n° 2 605 346 comprenant un tube 7 muni à son extrémité supérieure d'un collet extérieur 8 et d'une rondelle 9 formant tête prenant appui sur l'épaulement 6 du trou 3 de la tête de borne 1. A son extrémité inférieure, le tube 7 renferme une pièce d'extrémité 10 et deux tiges auxiliaires 11 qui traversent un orifice de la pièce d'extrémité 10 de telle manière que les extrémités inférieures des deux tiges 11, après enfoncement du piquet 2 dans le sol à travers le trou 3 de la tête de borne 1, sont chassées à l'aide d'un mandrin hors du tube 7 du piquet 2 en se recourbant de la manière visible sur la figure 1.

Tel que cela apparaît également sur la figure 1, la partie 4 du trou 3 de la tête de borne 1 est garnie d'un tronçon de tube 12 qui est solidaire de la tête de borne 1 et qui entoure avec du jeu le piquet 2.

On reconnaît par ailleurs sur la figure 1 deux pièces de verrouillage 13 de la tête de borne 1 sur le piquet 2. Chaque pièce de verrouillage 13 est partiellement noyée dans la tête de borne 1, traverse le tube 12 et fait saillie à l'intérieur du tube 12 à une profondeur telle qu'elle entre en contact avec le piquet 2 et se trouve déformée par ce dernier lors de son enfoncement dans le sol à travers la tête de borne 1. Cette déformation vers le bas que les pièces de verrouillage 13 subissent lors de l'enfoncement du piquet 2 fait que lorsque le piquet 2 est entièrement enfoncé jusqu'à l'appui de la rondelle 9 du collet 8 sur l'épaulement 6 du trou 3 de la tête de borne 1, cette dernière est parfaitement verrouilée sur le piquet 2 par les pièces de verrouillage 13.

Selon les figures 2 à 4, pour fabriquer une tête de borne 1 avec des pièces de verrouillage 13 incorporées, on ménage d'abord dans un tronçon de tube 12, par exemple en poly (chlorure de vinyle), des fentes permettant d'engager sur le tube 12 les pièces de verrouillage 13. Selon les figures 3 et 4, chaque pièce de verrouillage 13 est constituée par une lame plate rectiligne qui, une fois engagée sur le tube 12, dans les fentes de ce dernier, comporte une partie 14 extérieure au tube, servant de partie d'ancrage de la pièce 13 dans la tête de borne, et une partie 15 intérieure au tube 12, servant de griffe coopérant avec le piquet d'ancrage.

Pour mouler la tête de borne 1, on utilise, selon la figure 2, un moule 16 en forme de tronc de cône ou de tronc de pyramide, ouvert vers le haut. Le fond 17 du moule 16 comporte, sur la face supérieure, une saillie centrale 18 étagée, le diamètre de la partie inférieure de la saillie 18 étant supérieur au diamètre extérieur du tronçon de tube 12, et le diamètre de la partie supérieure de la saillie 18 étant très légèrement inférieur au diamètre intérieur du tronçon de tube 12, de manière que ce dernier puisse être emboîté sur la partie supérieure de la saillie 18. La saillie 18 est à son tour surmontée d'un insert ou noyau 19 cylindrique dont le diamètre est inférieur au diamètre de la partie supérieure de la saillie 18.

Il est à noter que le diamètre intérieur du tube 12 est supérieur au diamètre extérieur du tube 7 du piquet 2 (figure 1) et que le diamètre de l'insert ou noyau 13 est légèrement inférieur au diamètre extérieur du tube 7.

Le tronçon de tube 12 est engagé depuis le haut sur l'insert ou noyau 19 et sur la partie supérieure de la saillie 18, les pièces de verrouillage 13 pouvant être rapportées sur le tube 12 soit avant, soit après, de telle sorte que les griffes 15 des pièces de verrouillage 13, situées à l'intérieur du tronçon de tube 12, viennent porter contre l'insert ou noyau 19.

On verse ensuite dans le moule 16, autour du tronçon de tube 12, une matière à mouler, par exemple du béton de résine, destinée à constituer la tête de borne 1, de sorte que les parties 14 des pièces de verrouillage 13 extérieures au tube 12 se trouvent noyées dans cette matière.

Après séchage de la matière, on démoule la tête 1 avec le tronçon de tube 12 et les pièces de verrouillage 13 qui en sont solidaires.

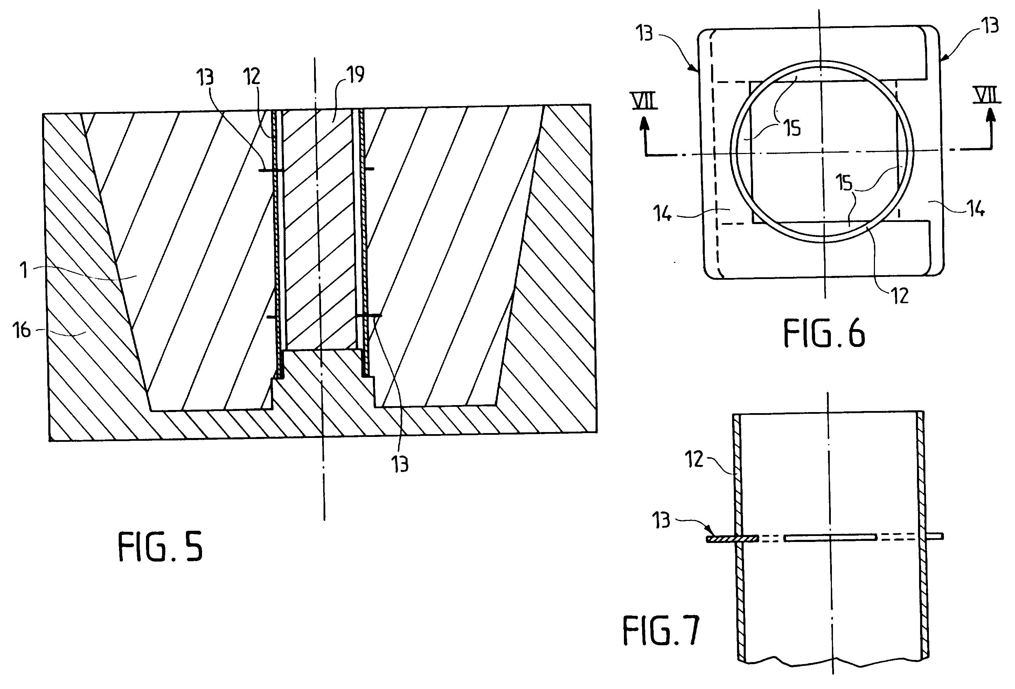

Le mode de réalisation des figures 5 à 7 diffère du mode de réalisation des figures 1 à 4 par le fait que les pièces de verrouillage 13 sont ici constituées par des lames plates découpées en U comprenant chacune une partie d'ancrage 14 et trois griffes 15 situées à l'intérieur du tube 12 en étant décalées de 90° les unes par rapport aux autres.

Il convient de remarquer que chacune des pièces de verrouillage 13, au lieu de se trouver dans un plan perpendiculaire à l'axe du tube 12, pourrait également être rapportée sur le tube 12 dans un plan oblique par rapport à l'axe du tube.

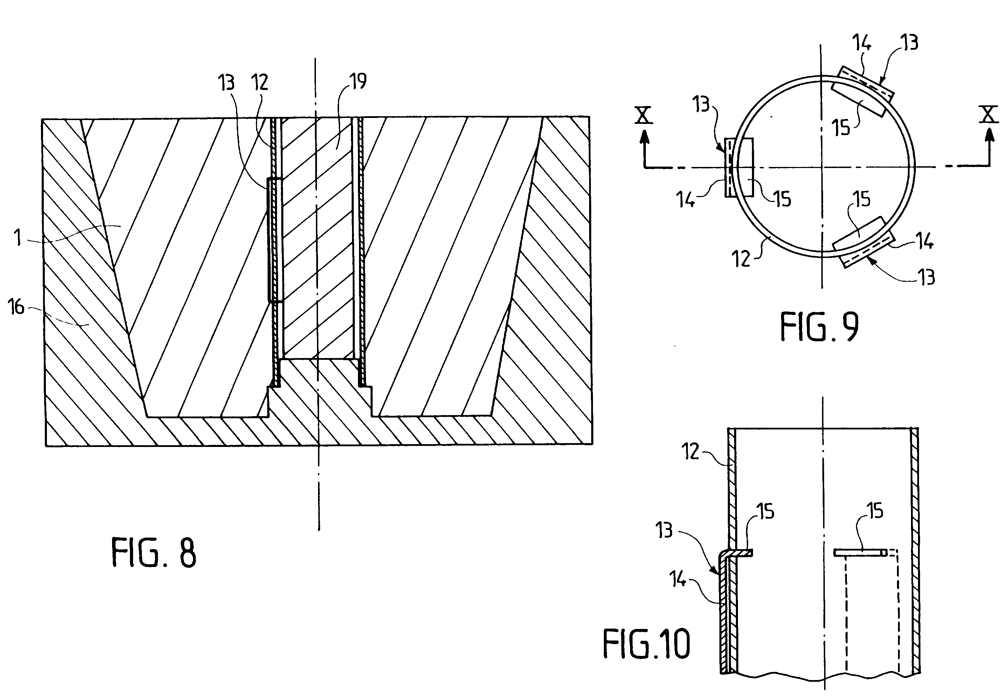

Dans le mode de réalisation suivant les figures 8 à 10, trois pièces de verrouillage 13 chacune constituée par une lame pliée en U sont réparties à 120° les unes par rapport aux autres sur le pourtour du tronçon de tube 12. Chaque pièce 13 comporte une partie d'ancrage 14 rectiligne parallèle à l'axe du tube, donc verticale, et, à chaque extrémité de cette dernière, une griffe 15 intérieure au tronçon de tube 12, perpendiculaire à l'axe du tube, donc horizontale.

Les griffes 15, au lieu d'être horizontales comme dans l'exemple représenté, pourraient également être obliques par rapport à l'axe du tronçon de tube 12.

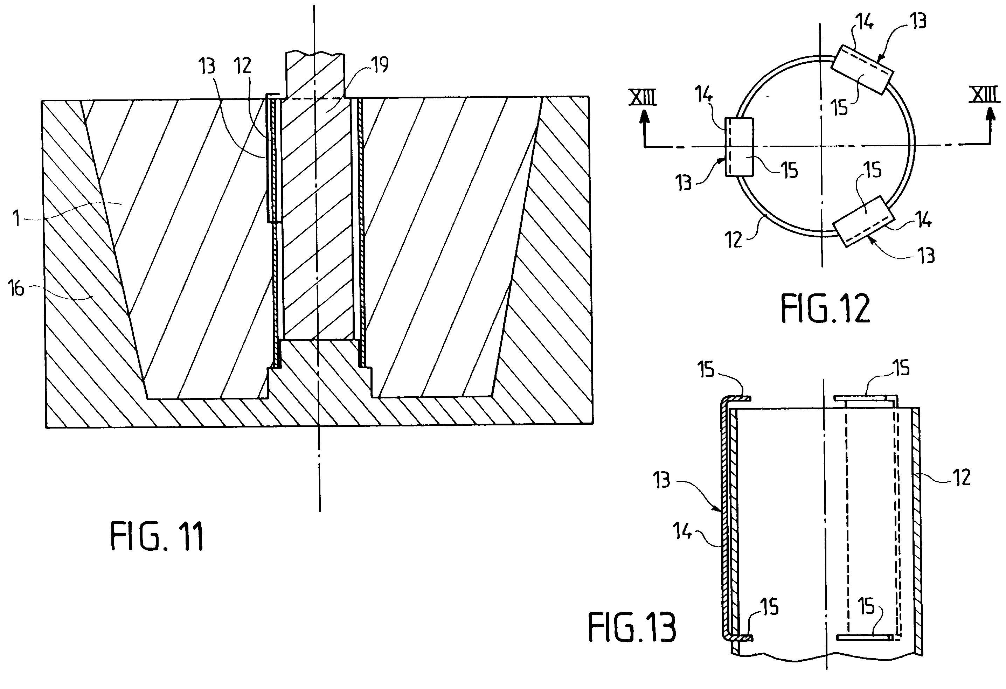

Les pièces de verrouillage 13 suivant le mode de réalisation des figures 11 à 13 correspondent aux pièces de verrouillage 13 du mode de réalisation des figures 8 à 10. Toutefois, alors que dans le mode de réalisation des figures 8 à 10, les deux griffes 15 de chaque pièce de verrouillage 13 se trouvent à l'intérieur du tronçon de tube 12, donc à l'intérieur de la tête de borne 1, dans le mode de réalisation des figures 11 à 13, l'une des griffes 15 se trouve à l'intérieur du tronçon de tube 12 et l'autre à l'extérieur du tronçon de tube 12, donc également à l'extérieur de la tête de borne 1.

Les pièces de verrouillage 13 qui sont avantageusement en métal, de préférence en acier inoxydable, peuvent être maintenues en contact avec l'insert ou noyau central 19 pendant le moulage de la tête de borne 1, soit uniquement par leur effet de serrage dans les évidements ménagés dans le tronçon de tube 12, soit par la mise en oeuvre de moyens supplémentaires, par exemple de bracelets élastiques non représentés enserrant les pièces de verrouillage 13.

Bien que dans les modes de réalisation représentés et décrits, la tête de borne est une tête massive réalisée par moulage, de préférence en béton de résine, par exemple en béton de polyester, il est possible, dans le cadre de l'invention, de réaliser également des têtes de bornes creuses ou évidées injectées en matière plastique, comportant un trou de passage avec au moins une griffe. Dans ce cas, les pièces de verrouillage sont placées sur le noyau de moule formant le trou de la tête de borne et la matière plastique est injectée sur les parties d'ancrage desdites pièces (surinjection).

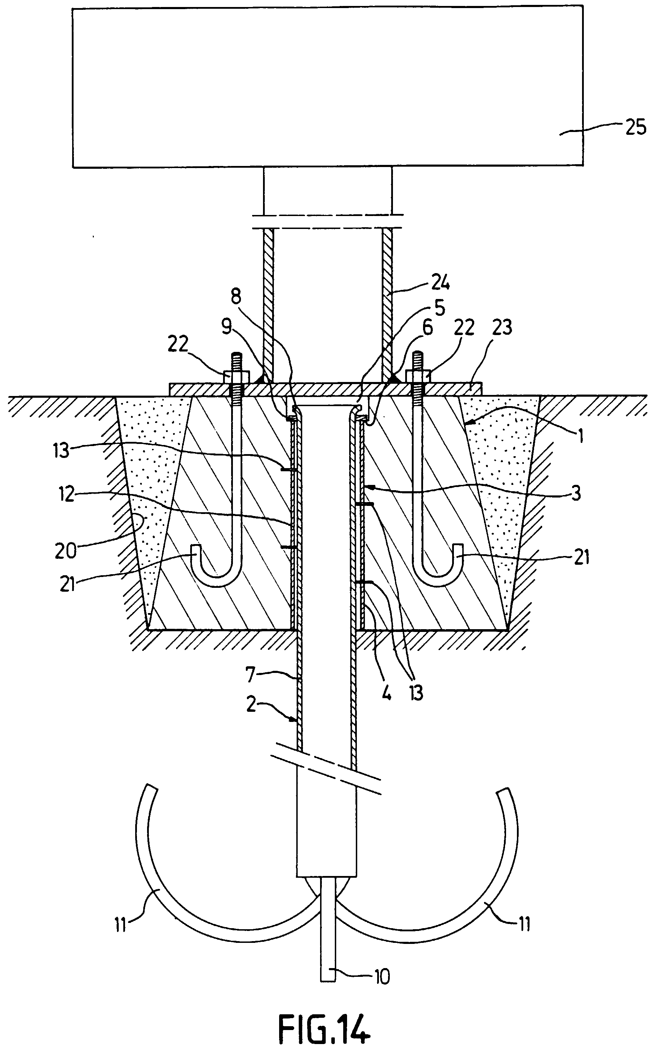

Selon la figure 14, une semelle 1 est fixée au sol à l'aide d'un piquet d'ancrage 2, la semelle 1 et le piquet 2 présentent les caractéristiques générales de la tête de borne et du piquet des modes de réalisation précédents (trou 3 formé de deux parties 4 et 5 avec épaulement 6 et garni d'un tronçon de tube 12 avec pièces de verrouillage 13 pour la semelle, tube 7 avec collet 8 et rondelle 9 à l'extrémité supérieure et avec pièce d'extrémité 10 et deux tiges 11 pour le piquet).

La semelle 1 disposée dans un trou 20 creusé dans le sol de manière que sa face supérieure se trouve sensiblement au niveau du sol, est plaquée contre le fond du trou 20 par le piquet 2. La semelle 2 comporte des organes de fixation 21, par exemple des goujons noyés dans la semelle 1 de manière à faire saillie vers le haut, en vue de la fixation sur la semelle, par exemple à l'aide d'écrous 22, d'une plaque 23 servant de pied à un poteau 24 portant un panneau 25, par exemple un panneau indicateur, de signalisation ou autre.

Bien entendu, il serait possible, dans le cadre de l'invention, de remplacer les organes de fixation 21 noyés dans la semelle 1 par d'autres moyens de fixation, par exemple par une plaque percée d'un trou, fixée par soudage à l'extrémité supérieure du tube 7 du piquet 2 de manière que les tiges 11 puissent être déployées à l'aide d'un mandrin traversant ledit trou, et de fixer la plaque 23 constituant le pied du poteau 24 à l'aide de vis à la plaque solidaire du tube 7 du piquet 2, après ancrage de la semelle 1 à l'aide du piquet 2.

Par ailleurs, ce dispositif d'ancrage peut être utilisé non seulement pour la pose de mâts ou poteaux pour panneaux, mais d'une manière générale pour la pose instantanée d'éléments de toutes formes dont la fixation s'effectue jusqu'à présent généralement par scellement à l'aide de béton, par exemple des bornes kilométriques.

## Revendications

1. Dispositif d'ancrage comprenant une semelle (1) et un piquet d'ancrage (2), la semelle étant traversée par un trou (3, 4) d'un diamètre supérieur au diamètre extérieur du piquet, et le piquet destiné à être enfoncé dans le sol à travers la semelle comportant une tête (8) de diamètre supérieur au diamètre du trou de la semelle, ce dispositif comprenant, par ailleurs, des moyens (13) pour verrouiller ou solidariser la semelle avec le piquet à la fin de l'enfoncement de ce dernier, caractérisé par le fait que lesdits moyens de verrouillage ou de solidarisation comprennent au moins une pièce de verrouillage (13) ayant au moins une partie d'ancrage (14) noyée dans la matière de la semelle, et au moins une griffe (15) discrète qui, à l'intérieur du trou (3, 4) de la semelle (1), fait saillie de la paroi dudit trou pour coopérer avec le piquet (2) de manière à permettre, lors de l'enfoncement du piquet à travers la semelle, un mouvement relatif du piquet par rapport à la semelle, dans le sens d'enfoncement du piquet, et à s'opposer à tout mouvement dans le sens contraire.

2. Dispositif suivant la revendication 1, caractérisé par le fait que la semelle (1) comprend un tube (12) garnissant le trou (4) de la semelle (1), ayant un diamètre intérieur supérieur au diamètre du piquet (2) et présentant au moins un évidement traversé par ladite griffe (15).

3. Dispositif suivant la revendication 1 ou 2, caractérisé par le fait qu'il comprend plusieurs griffes (15) à l'intérieur du trou (3,4) de la semelle (1).

4. Dispositif suivant la revendication 3, caractérisé par le fait que lesdites griffes (15) sont disposées dans un même plan.

5. Dispositif suivant la revendication 3, caractérisé par le fait que lesdites griffes (15) sont disposées dans des plans différents.

6. Dispositif suivant la revendication 4 ou 5, caractérisé par le fait que ledit plan ou chacun desdits plans est oblique par rapport à l'axe du trou de la semelle.

7. Dispositif suivant l'une quelconque des revendications précédentes, caractérisé par le fait que chaque griffe fait partie d'une lame plate rectiligne.

8. Dispositif suivant l'une quelconque des revendications 1 à 6, caractérisé par le fait que chaque griffe fait partie d'une lame plate en U.

9. Dispositif suivant l'une quelconque des revendications 1 à 6, caractérisé par le fait que chaque griffe fait partie d'une lame pliée en U.

10. Dispositif suivant l'une quelconque des revendications précédentes, caractérisé par le fait que la semelle (1) constitue la tête d'une borne.

11. Dispositif suivant l'une quelconque des revendications 1 à 9, caractérisé par le fait que la semelle (1) constitue une embase pour un mât ou poteau (24) et comporte des éléments (21) pour la fixation du pied du mât ou poteau.

12. Procédé de fabrication de la semelle (1) d'un dispositif d'ancrage suivant l'une quelconque des revendications précédentes, consistant à mouler une matière moulable dans un moule (16) muni d'une partie centrale (19) d'un diamètre inférieur au diamètre extérieur du piquet d'ancrage (2), réservant ledit trou (3,4) dans la semelle, caractérisé par le fait qu'on emboîte sur ladite partie centrale un tube (12) de diamètre intérieur supérieur au diamètre extérieur du piquet d'ancrage, comportant au moins un évidement, qu'on rapporte de l'extérieur sur ledit tube au moins une pièce de verrouillage (13) comprenant une partie d'ancrage (14) extérieure au tube et au moins une partie faisant saillie à travers ledit évidement à la manière d'une griffe (15) vers l'intérieur du tube, qu'on fait porter ladite griffe contre la partie centrale du moule, et qu'on verse la matière moulable dans le moule, à l'extérieur dudit tube, pour constituer ainsi une semelle dans laquelle sont noyés ledit tube et la partie d'ancrage de la pièce de verrouillage.

13. Procédé suivant la revendication 12, caractérisé par le fait qu'on utilise un moyen de serrage, par exemple un bracelet élastique, pour appliquer la griffe de la pièce de verrouillage contre la partie centrale du moule, pendant l'introduction de la matière moulable dans le moule et pendant le durcissement de cette matière.

## Patentansprüche

1. Verankerungsvorrichtung, die eine Grundplatte (1) und einen Verankerungspflock (2) beinhaltet, wobei die Grundplatte von einem Loch durchquert wird, das einen größeren Innendurchmesser als den Außendurchmesser des Pflocks aufweist und wobei der Pflock, der zum Eintreiben in den Boden durch die Grundplatte hindurch vorgesehen ist, einen Kopf (8) mit größerem Durchmesser als demjenigen des Grundplattenloches aufweist, außerdem Mittel zum Verriegeln oder Festlegen der Grundplatte mit dem Pflock nach dem Eintreiben von letzterem, **dadurch gekennzeichnet, daß** die besagten Verriegelungs- oder Festlegungsmittel wenigstens ein Verriegelungsteil (13) mit wenigstens einem im Material der Grundplatte eingesetzten Verankerungsbereich (14) und wenigstens eine einzelne Klaue (15) aufweist, die im Inneren des Loches (3, 4) der Grundplatte (1) über die Wandfläche des besagten Loches vorsteht, um mit dem Pflock (2) in der Art und Weise zusammenzuwirken, daß nach dem Einschieben des Pflocks durch die Grundplatte in Einschubrichtung des Pflocks eine Relativbewegung des Pflocks im Bezug auf die Grundplatte ermöglicht und die Bewegung in umgekehrter Richtung verhindert wird.

2. Vorrichtung gemäß Anspruch 1, **dadurch gekennzeichnet, daß** die Grundplatte ein das Loch (4) der Grundplatte (1) auskleidendes Rohr (12) aufweist, das einen größeren Innendurchmesser als denjenigen des Pflocks aufweist und wenigstens eine Aussparung besitzt, durch die die besagte Klaue (15) hindurchtritt.

3. Vorrichtung gemäß Anspruch 1 oder 3, **dadurch gekennzeichnet, daß** sie mehrere Klauen (15) im Innern des Loches (3, 4) der Grundplatte (1) aufweist.

4. Vorrichtung gemäß Anspruch 3, **dadurch gekennzeichnet, daß** die besagten Klauen (15) in einer gemeinsamen Ebene angeordnet sind.

5. Vorrichtung gemäß Anspruch 3, **dadurch gekennzeichnet, daß** die besagten Klauen in unterschiedlichen Ebenen angeordnet sind.

6. Vorrichtung gemäß Anspruch 4 oder 5, **dadurch gekennzeichnet, daß** die besagte Ebene oder jede der besagten Ebenen im Bezug auf die Lochachse der Grundplatte schräg angeordnet ist.

7. Vorrichtung gemäß einem der vorhergehenden Ansprüche, **dadurch gekennzeichnet, daß** jede Klaue Teil einer geraden streifenförmigen Platte ist.

8. Vorrichtung nach einem der Ansprüche 1 bis 6, **dadurch gekennzeichnet, daß** jede Klaue Teil einer geraden Platte in Form eines U ist.

9. Vorrichtung nach einem der Ansprüche 1 bis 6, **dadurch gekennzeichnet, daß** jede Klaue Teil eines in Form eines U gebogenen Streifens ist.

10. Vorrichtung nach einem der vorangegangenen Ansprüche, **dadurch gekennzeichnet, daß** die Grundplatte (1) den Kopf eines Begrenzungssteines bildet.

11. Vorrichtung nach einem der Ansprüche 1 bis 9, **dadurch gekennzeichnet, daß** die Grundplatte (1) die Basis für einen Mast oder Pfeiler (24) bildet und Elemente (21) für die Befestigung des Mast- oder Pfeilerfußes besitzt.

12. Verfahren zur Herstellung der Grundplatte (1) einer Verankerungsvorrichtung gemäß einem der vorhergehenden Ansprüche, das darin besteht, ein gießbares Material in eine Gießform (16) zu gießen, die mit einem zentralen Teilbereich (19) mit kleinerem Durchmesser als demjenigen Außendurchmesser des Verankerungspflocks (2) versehen ist, der das besagte Loch (3, 4) in der Grundplatte ausspart, **dadurch gekennzeichnet, daß** man über den besagten zentralen Bereich ein Rohr (12) überstülpt, welches einen größeren Innendurchmesser als denjenigen Außendurchmesser des Verankerungspflocks aufweist und wenigstens eine Aussparung besitzt, daß man von außen auf das besagte Rohr wenigstens ein Verriegelungsteil (13) aufsteckt, welches ein am Rohr befindliches Verankerungsteil und wenigstens einen Teilbereich besitzt, der durch die besagte Aussparung in das Innere des Rohres in Form einer Klaue (15) vorsteht, daß man die besagte Klaue gegen den zentralen Bereich der Gießform ausrichtet und daß man das gießbare Material in die Gießform außen um das besagte Rohr herum eingießt, um auf diese Weise eine Grundplatte herzustellen, in die das besagte Rohr und das Verankerungsteil des Verriegelungsteiles eingebettet sind.

13. Verfahren gemäß Anspruch 12, **dadurch gekennzeichnet, daß** man Klemmittel, beispielsweise einen elastischen Ring benutzt, um die Klaue des Verankerungsteiles gegen den Mittelbereich der Gießform während des Einbringens des gießbaren Materials in die Gießform und während der Aushärtung des Materials zu drücken.

## Claims

1. Securing device comprising a footplate (1) and an anchoring post (2), the footplate having a hole (3,4) passing therethrough, which hole has a diameter which is greater than the outer diameter of the post, and the post, which is intended to be sunken in the ground through the footplate, comprising a head (8) of a diameter which is greater than the diameter of the hole in the footplate, this device comprising, furthermore, means (13) for locking or rendering the footplate integral with the post with the object of sinking this latter, characterised by the fact that said means for locking or rendering integral comprise at least one locking piece (13) having at least one securing part (14) embedded in the material of the footplate, and at least one discrete claw (15) which, inside the hole (3,4) of the footplate (1), projects from the wall of said hole to cooperate with the post (2) in such a manner as to permit, during the sinking of the post through the footplate, relative movement of the post in relation to the footplate, in the direction of sinking of the post, and to oppose any movement in the opposite direction.

2. Device according to Claim 1, characterised by the fact that the footplate (1) has a tube (12) lining the hole (4) in the footplate (1), having an inner diameter which is greater than the diameter of the post (2), and having at least one recess through which said claw passes (15).

3. Device according to Claim 1 or Claim 2, characterised by the fact that it comprises several claws (15) inside the hole (3,4) in the footplate (1).

4. Device according to Claim 3, characterised by the fact that the claws (15) are arranged in one and the same plane.

5. Device according to Claim 3, characterised in that said claws (15) are arranged in different planes.

6. Device according to one of Claims 4 or 5, characterised in that said plane or each of said planes is oblique in relation to the axis of the hole in the footplate.

7. Device according to any one of the preceding claims, characterised by the fact that each claw forms part of a rectilinear footplate.

8. Device according to any one of Claims 1 to 6, characterised by the fact that each claw forms part of a U-shaped footplate.

9. Device according to any one of Claims 1 to 6, characterised by the fact that each claw is part of a footplate folded in a U-shape.

10. Device according to any one of the preceding Claims, characterised by the fact that the footplate (1) constitutes the head of a guide fender.

11. Device according to any one of Claims 1 to 9, characterised by the fact that the footplate (1) forms a base for a mast or pole, (24), and comprises members (21) to secure the foot of the mast or pole.

12. Method of manufacturing the footplate (1) of a securing device according to any one of the preceding Claims, consisting in moulding a mouldable material in a mould (16) which is provided with a central part (19) of a diameter which is less than the outer diameter of said hole (3,4) in the footplate, characterised by the fact that there is inserted, on the central part, a tube (12) of an inner diameter which is greater than the outer diameter of the anchoring post, comprising at least one recess, that there is connected, to the exterior of said tube, at least one locking part (13) comprising a securing part (14) outside the tube and at least one part which projects through said recess in the manner of a claw (15) towards the inside of the tube; that said claw is caused to bear on the central part of the mould; and that the mouldable material is cast in the mould, at the outside of said tube, to form, in this manner, a footplate in which said tube and the securing part of the locking part are embedded.

13. Method according to Claim 12, characterised by the fact that a clamping means, for example a rubber band, is used to apply the claw of the locking part against the central part of the mould during the introduction of the mouldable material into the mould and during the hardening of this material.
